# EUROPÄISCHE PATENTSCHRIFT

(11) **EP 2 322 401 B1**
(45) Veröffentlichungstag und Bekanntmachung des Hinweises auf die Patenterteilung: **10.04.2019**
(21) Anmeldenummer: 10191125.3
(22) Anmeldetag: 15.11.2010
(51) Int. Cl.: G08G 1/16, B62D 15/02, B60W 30/06, B60W 50/08, B60W 10/20

(54) **Verfahren zur Unterstützung eines Fahrers eines Fahrzeugs**
Method to support a driver of a vehicle
Procédé destiné à assister le conducteur d'un véhicule

(30) Priorität: 16.11.2009 DE 102009046731
(43) Veröffentlichungstag der Anmeldung: 18.05.2011
(73) Patentinhaber: Robert Bosch GmbH, 70442 Stuttgart (DE)
(72) Erfinder: Belser, Florian, 72379, Hechingen (DE); Scherl, Michael, 74321, Bietigheim (DE); Zimmermann, Uwe, 71686, Remseck (DE)

(56) Entgegenhaltungen:
- EP-A2- 1 561 673
- DE-A1- 10 261 176
- DE-A1- 10 324 810
- DE-A1- 10 336 985

## Beschreibung

### Stand der Technik

Die Erfindung geht aus von einem Verfahren zur Unterstützung eines Fahrers eines Fahrzeugs bei einem Fahrmanöver gemäß dem Oberbegriff des Anspruchs 1.

Verfahren zur Unterstützung eines Fahrers eines Fahrzeugs sind zum Beispiel solche Verfahren, die den Fahrer beim Einparken des Fahrzeugs unterstützen. Neben Verfahren, die den Fahrer beim Einparken des Fahrzeugs unterstützen, sind auch Verfahren bekannt, die den Fahrer beim Manövrieren in schwieriger Umgebung, zum Beispiel beim Befahren von engen Straßen oder Wegen, unterstützen.

Verfahren, die den Fahrer bei Fahrmanövern unterstützen, werden durch sogenannte Fahrassistenzsysteme verwirklicht. Üblicherweise eingesetzte Fahrassistenzsysteme sind zum Beispiel Einparkassistenzsysteme. Bei Einparkassistenzsystemen wird unterschieden in abstandsmessende Systeme, in semiautomatische und vollautomatische sowie in autonome Systeme.

Bei abstandsmessenden Systemen wird der Abstand zu Objekten in der Umgebung des Fahrzeugs gemessen und dem Fahrer angezeigt. Aus dem Abstand zu den Objekten kann der Fahrer abschätzen, wie er seine zu fahrende Bahn zu planen hat und kann bei Auftauchen eines Hindernisses rechtzeitig das Fahrzeug zum Stillstand bringen. Die Anzeige des Abstandes zu Objekten erfolgt dabei üblicherweise optisch und/oder akustisch. Zur optischen Anzeige werden zum Beispiel LEDs eingesetzt, die durch unterschiedliche Größe und/oder Farbe den Abstand zu einem Objekt anzeigen. Hierzu nimmt üblicherweise die Anzahl der aufleuchtenden LEDs mit abnehmendem Abstand zu einem Objekt zu. Zudem kann bei Unterschreiten eines bestimmten Abstandes eine Farbänderung vorgenommen werden. Bei einer akustischen Anzeige wird ein Signalton gesendet, wobei mit abnehmendem Abstand zu einem Objekt die Frequenz und/oder die Tonhöhe und gegebenenfalls gleichzeitig die Lautstärke zunimmt. Bei Unterschreitung eines für die Fahrzeugnavigation kritischen Abstandsbereichs erfolgt in der Regel eine Stopp-Warnung für den Fahrer in Form eines Dauertons.

Bei semi-automatischen oder vollautomatischen Einparkassistenzsystemen wird zunächst während der Vorbeifahrt an einer Parklücke die Parklücke vermessen und entsprechend der Parklückengeometrie eine Einparktrajektorie berechnet. Dem Fahrer werden dann Lenkhinweise zum Einfahren in die Parklücke gegeben. Alternativ ist es auch möglich, dass die Lenkeingriffe vom Einparkassistenzsystem vollautomatisch mithilfe von Stellmotoren übernommen werden. Bei einem vollautomatischen System wird zusätzlich auch die Längsführung des Fahrzeugs, das heißt Bremsen und Beschleunigen des Fahrzeugs, vom Einparkassistenzsystem übernommen. Autonome Systeme führen diesen Vorgang ohne die Anwesenheit eines Fahrers aus. Das bedeutet, dass der Fahrer das Fahrzeug zum Beispiel nach Vermessen der Parklücke bereits verlassen kann und das Fahrzeug autonom eingeparkt wird.

Wenn das Einparkassistenzsystem dem Fahrer Hinweise zu Lenkeinstellungen gibt, werden diese üblicherweise optisch über ein geeignetes Display angezeigt. Aus US-A 2008/0023253 ist es zum Beispiel bekannt ein sprechendes Display im Lenkrad des Fahrzeugs vorzusehen. Alternativ ist in US-A 2008/0023253 auch beschrieben, dem Fahrer die Hinweise haptisch anzuzeigen. Dies kann zum Beispiel durch geeignete Vibrationselemente im Lenkrad erfolgen.

Nachteil der meisten Fahrassistenzsysteme ist, dass dem Fahrer Hinweise optisch auf einem Display gegeben werden, so dass dieser seinen Blick vom Straßenverkehr abwenden muss. Auch bei einer haptischen Anzeige durch Vibration ist zunächst keine eindeutige Aussage über eine gewünschte Lenkrichtung zu entnehmen.

Die Dokumente DE 103 24 810 A1 und DE 103 36 985 A1 offenbaren Verfahren zur Unterstützung eines Fahrers bei einem Fahrmanöver, wie z. B. Park- oder Rangiermanöver, wobei ein Lenkmoment des Lenkrads des Fahrzeugs angepasst wird.

Die Aufgabe der vorliegenden Erfindung gegenüber dem Stand der Technik ist es, die Bedienung eines Fahrassistenzsystems zu verbessern.

### Offenbarung der Erfindung

Die vorstehende Aufgabe wird durch eine Verfahren zur Unterstützung eines Fahrers eines Fahrzeugs bei einem Fahrmanöver gemäß des unabhängigen Anspruchs 1 sowie der abhängigen Weiterführungen gelöst. Zunächst wird anhand von Daten der Umgebung des Fahrzeugs eine zu fahrende Trajektorie berechnet. Der Fahrer erhält anschließend haptisch Hinweise zu notwendigen Lenkeinstellungen zum Fahren der Trajektorie, indem ein zusätzliches Moment am Lenkrad des Fahrzeugs aufgebracht wird, wodurch der Fahrer für eine Bewegung des Lenkrads in eine Richtung, die von der Lenkeinstellung zum Fahren der Trajektorie wegführt, eine deutlich größere Kraft aufwenden muss als für eine Bewegung des Lenkrads in Richtung der Lenkeinstellung, die für das Fahren der Trajektorie notwendig ist. Erfindungsgemäß erfolgt bei mehreren möglichen alternativ zu fahrenden Trajektorien eine Auswahl der Trajektorie durch Überwinden des auf das Lenkrad aufgebrachten Momentes, wobei das Moment, das zwischen zwei Lenkeinstellungen zum Befahren alternativer Trajektorien auf das Lenkrad aufgebracht wird, kleiner ist als das Moment, das auf das Lenkrad aufgebracht wird, wenn keine weitere alternative Trajektorie bei einem Überwinden des Momentes ermittelt wurde.

### Vorteile der Erfindung

Beim erfindungsgemäßen Verfahren zur Unterstützung eines Fahrers eines Fahrzeugs bei einem Fahrmanöver wird zunächst anhand von Daten der Umgebung des Fahrzeugs eine zu fahrende Trajektorie berechnet. Der Fahrer erhält dann Hinweise zu notwendigen Lenkeinstellungen zum Fahren der Trajektorie. Die Hinweise zu notwendigen Lenkeinstellungen werden dem Fahrer über sich ändernde Momente, die auf ein vom Fahrer zu betätigendes Lenkrad aufgebracht werden, gegeben.

Vorteil des erfindungsgemäßen Verfahrens ist es, dass dem Fahrer die Informationen zu notwendigen Lenkeinstellungen, anhand derer eine Trajektorie zu durchfahren ist, über das Lenkrad haptisch gegeben werden und der Fahrer so seine volle Aufmerksamkeit der Umgebung und dem Manövriervorgang widmen kann. Der Fahrer muss seinen Blick nicht vom Geschehen weg zwischendurch auf ein Display oder auf Eingabeelemente richten. Ein weiterer Vorteil des erfindungsgemäßen Verfahrens ist, dass durch das aufgebrachte Moment bei Bewegung des Lenkrads in eine Richtung ein eindeutiger Hinweis an den Fahrer gegeben werden kann, in welche Richtung das Lenkrad für die notwendigen Lenkeinstellungen zum Fahren der Trajektorie bewegt werden soll. So muss der Fahrer zum Beispiel für eine Bewegung des Lenkrads in eine Richtung, die von der Lenkeinstellung zum Fahren der Trajektorie wegführt, eine deutlich größere Kraft aufwenden als für eine Bewegung des Lenkrads in Richtung der Lenkeinstellung, die für das Fahren der Trajektorie notwendig ist.

Um den Fahrer zu veranlassen, das Lenkrad in die Richtung zu bewegen, die zum Fahren der berechneten Trajektorie notwendig ist, ist es weiterhin vorteilhaft, wenn das auf das Lenkrad aufgebrachte Moment zunimmt, wenn die gewählte Lenkeinstellung von der zum Fahren der Trajektorie notwendigen Lenkeinstellung abweicht. Hierbei ist es weiterhin vorteilhaft, dass mit einer zunehmenden Abweichung auch das aufgebrachte Moment zunimmt. Durch das zunehmende Moment wird der Fahrer veranlasst, das Lenkrad in die Richtung zu bewegen, die zum Fahren der berechneten Trajektorie notwendig ist.

Sollten sich in einer Fahrsituation mehrere Alternativen ergeben, die gefahren werden können, zum Beispiel wenn das Verfahren eingesetzt wird, um den Fahrer beim Einparken des Fahrzeugs zu unterstützen und zwei Parklücken gegen-überliegend oder nebeneinander frei sind und das Fahrzeug in jede der Parklücken einparken kann, oder zum Beispiel bei einer Fahrunterstützung in engen Straßen, wenn das Fahrzeug auf eine Kreuzung zufährt und ein Abbiegen in jede beliebige Richtung möglich ist, erfolgt erfindungsgemäß bei mehreren möglichen alternativen zu fahrenden Trajektorien eine Auswahl der Trajektorie durch Überwinden des auf das Lenkrad aufgebrachten Moments. In diesem Fall bewegt der Fahrer das Lenkrad entgegen dem Widerstand, der sich durch das Moment ergibt und bei Überschreiten eines Maximums wird eine alternative Trajektorie gefahren. Auf diese Weise behält der Fahrer weiterhin die Möglichkeit, bei mehreren alternativen Richtungen auszuwählen, welche der Alternativen er wählen möchte.

Um den Fahrer nicht aufgrund eines zu hohen Widerstandes durch das aufgebrachte Moment auf eine Trajektorie festzulegen, wenn mehrere zu fahrende Richtungen möglich sind, ist erfindungsgemäß das Moment, das zwischen zwei Lenkeinstellungen zum Befahren alternativer Trajektorien auf das Lenkrad aufgebracht wird, kleiner als das Moment, das auf das Lenkrad aufgebracht wird, wenn keine weitere alternative Trajektorie bei einem Überwinden des Momentes ermittelt wurde. Durch das kleinere Moment bei einer Lenkeinstellung zwischen zwei möglichen zu fahrenden Trajektorien wird der Fahrer so nicht von der Auswahl einer alternativen Trajektorie abgehalten, da er eine zu große Kraft auf das Lenkrad aufbringen müsste, um die Fahrtrichtung zu ändern.

Neben der Auswahl der Trajektorie durch Überwinden eines Momentes ist es alternativ auch möglich, dass dem Fahrer vor Fahren der Trajektorien die Auswahl zum Beispiel in einem geeigneten Display angezeigt wird und der Fahrer zum Beispiel über eine geeignete Taste oder einen Schalter die entsprechende Trajektorie auswählt, die er zu fahren wünscht. Dies kann zum Beispiel durch eine Navigationseinrichtung erfolgen. Wenn der Fahrer die Trajektorie vorab auswählt, die er zu fahren wünscht, ist es weiterhin vorteilhaft, wenn bei einer Abweichung von der Trajektorie in jede Richtung das Moment auf gleiche Weise zunimmt.

In einer weiteren Ausführungsform wird die Ausgabe von Hinweisen zu Lenkeinstellungen beendet, wenn bei einer Betätigung des Lenkrads das auf das Lenkrad aufgebrachte Moment überwunden wird. In diesem Fall wird das Überwinden des Moments dahingehend gedeutet, dass der Fahrer nicht dem System zu folgen wünscht, sondern selber die Kontrolle über das Fahrzeug behalten möchte. Die Übergabe der Steuerung an den Fahrer erfolgt dabei insbesondere dann, wenn bei Überwinden des Moments bei einer weiteren Lenkbewegung in die durchgeführte Richtung keine weitere Trajektorie berechnet worden ist oder wenn zuvor eine eindeutige Auswahl der Trajektorie erfolgt war.

Alternativ ist es weiterhin auch möglich, dass dem Fahrer zusätzlich oder alternativ die Möglichkeit gegeben wird, das Verfahren durch Betätigen eines geeigneten Schalters zu beenden. Der Schalter kann sich dabei zum Beispiel im Bereich der Armaturentafel des Fahrzeugs befinden oder alternativ und bevorzugt als Lenkradschalter ausgeführt sein.

Im Allgemeinen benötigt der Fahrer eines Fahrzeugs Unterstützung bei einem Einparkmanöver. Demzufolge ist das Fahrmanöver, bei dem der Fahrer des Fahrzeugs unterstützt wird, vorzugsweise ein Einparkvorgang in eine Parklücke. Die Parklücke kann dabei sowohl eine Querparklücke als auch eine Parallelparklücke sein. Die Unterstützung des Fahrers kann dabei sowohl durch Vorwärtsfahrt als auch bei einer Rückwärtsfahrt erfolgen. Bisher erfolgt die Unterstützung des Fahrers zum Einparken in die Parklücke zumeist bei einem Rückwärtsparkvorgang. Insbesondere das Einparken in eine Parallelparklücke erfolgt vorzugsweise rückwärts.

Wenn das Fahrmanöver ein Einparkvorgang in eine Parklücke ist, ist es weiterhin vorteilhaft, wenn mehrere alternative Trajektorien berechnet werden, wenn von einer momentanen Position des Fahrzeugs aus mehrere Parklücken befahren werden können. Wenn die Parklücken Querparklücken sind, können dabei zum Beispiel mehrere freie Parklücken nebeneinander angeordnet sein oder aber es sind zum Beispiel mehrere Parklücken nebeneinander frei, wobei zwischen zwei freien Parklücken auch ein Fahrzeug geparkt sein kann. Weiterhin ist es zum Beispiel auch möglich, dass sowohl auf der linken Seite des Fahrzeugs als auch auf der rechten Seite des Fahrzeugs Parklücken frei sind. Eine solche Situation tritt insbesondere in Parkhäusern oder auf Parkplätzen auf. Wenn es sich bei der Parklücke um eine Parallelparklücke handelt, so ist es zum Beispiel möglich, dass mehrere hintereinanderliegende Parklücken frei sind. Auch in diesem Fall ist es möglich, dass zwischen zwei freien Parklücken ein Fahrzeug geparkt ist. In diesem Fall wird jedoch üblicherweise die Trajektorie so berechnet, dass in die nächstliegende Parklücke eingeparkt wird.

Da Fahrmanöver, bei denen ein Fahrer des Fahrzeugs Unterstützung braucht, üblicherweise in engen Umgebungen erfolgen, wie beispielsweise bei Einparkvorgängen oder beim Befahren enger Straßen, ist es weiterhin vorteilhaft, wenn der Fahrer zusätzlich optische und/oder akustische Informationen zur Umgebung des Fahrzeugs erhält. Hierzu ist es zum Beispiel möglich, dass die Umgebung des Fahrzeugs mit geeigneten Abstandssensoren erfasst wird und der Fahrer Informationen zu Objekten in der Fahrzeugumgebung erhält, damit dieser das Fahrzeug zum Beispiel rechtzeitig vor einem Objekt abbremsen kann, um eine Kollision mit dem Objekt und damit Schäden sowohl am Fahrzeug als auch an dem Objekt zu vermeiden. Objekte, die sich in der Umgebung des Fahrzeugs befinden können, sind zum Beispiel andere Fahrzeuge. Weiterhin können Objekte auch Fahrbahnbegrenzungen, beispielsweise Mauern, Pflanzkübel, Ketten oder auch Pfosten, sein.

Neben der Unterstützung beim Einparken kann der Fahrer insbesondere auch beim Durchfahren enger Straßen oder Gassen unterstützt werden, wie sie beispielsweise auf Parkplätzen oder in Parkhäusern oder insbesondere auch in Altstadtbereichen mit engen Straßen auftreten.

Wenn der Fahrer zusätzlich optische und/oder akustische Informationen zur Umgebung des Fahrzeugs erhält, können die Informationen zum Beispiel durch LEDs, oder auf einem Display, zum Beispiel eines Navigationssystems oder des Bordcomputers, angezeigt werden. Zu akustischen Informationen können Töne gesendet werden, wobei es vorteilhaft ist, die Töne jeweils von der Seite des Fahrzeugs zu senden, in der sich das Hindernis befindet. Auf diese Weise erhält der Fahrer auch Hinweise zum Ort des Objekts.

Die Erfassung der Umgebung kann dabei durch beliebige, dem Fachmann bekannte Abstandssensoren erfolgen. Üblicherweise eingesetzte Abstandssensoren sind zum Beispiel Ultraschallsensoren, Radarsensoren, Infrarotsensoren, kapazitive Sensoren, Stereo-Video-Sensoren, PMD-Sensoren oder LIDAR-Sensoren.

Durch das erfindungsgemäße Verfahren erhält der Fahrer bei der Unterstützung eines Fahrmanövers Informationen über das Lenkrad wie beim Fahren in Spurrillen. Auf diese Weise kann insbesondere bezüglich der Lenkführung des Fahrzeuges auf eine zusätzliche optische oder akustische Anzeige verzichtet werden. Der Verzicht auf eine optische Anzeige hat den Vorteil, dass keine zusätzlichen Visualisierungselemente, beispielsweise Displays, notwendig sind, da die Querführung vollständig über das Lenkrad erfolgt. Hierdurch wird der Fahrer nicht vom Geschehen abgelenkt und kann seine volle Aufmerksamkeit auf den Verkehr richten. Zudem erfolgt keine Beeinträchtigung der Passagiere im Vergleich zu akustischen Systemen.

Soll der Fahrer zusätzlich Lenkhinweise erhalten, ist jedoch eine optische Anzeige, zum Beispiel über ein Display, notwendig. Alternativ kann in diesem Fall auch eine akustische Anzeige erfolgen. Weiterhin ist jedoch auch eine Abstandsanzeige über haptische Elemente, beispielsweise geeignete Vibrationssensoren, möglich. Bevorzugt ist jedoch eine optische und/oder akustische Anzeige für die Entfernung zu anderen Objekten.

### Kurze Beschreibung der Zeichnungen

Ausführungsbeispiele der Erfindung sind in den Zeichnungen dargestellt und werden in der nachfolgenden Beschreibung näher erläutert.

Es zeigen:
- Figur 1: Einparktrajektorien für ein Fahrzeug in zwei alternative Parklücken,
- Figur 2: ein Lenkmomentpotential bei zwei Auswahlmöglichkeiten.

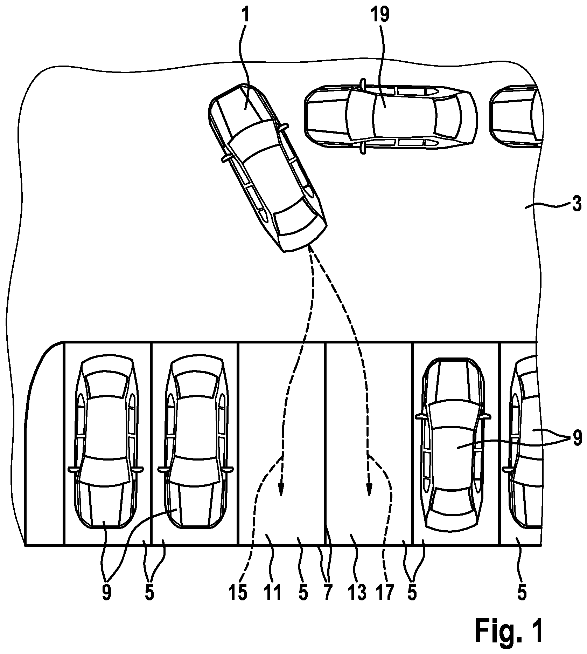

In Figur 1 sind Einparktrajektorien für ein Fahrzeug in zwei alternative Parklücken dargestellt.

Um ein Fahrzeug 1 abzustellen, wird dieses üblicherweise in einer geeigneten Parklücke geparkt. In der hier dargestellten Ausführungsform befinden sich hierzu neben einem Fahrweg 3 mehrere Querparkplätze 5. Die Querparkplätze 5 sind mit Begrenzungslinien 7 markiert.

Einige der Querparkplätze 5 sind in der Darstellung gemäß Figur 1 bereits durch weitere Fahrzeuge 9 belegt. Zwischen zwei Fahrzeugen 9 sind noch eine erste Parklücke 11 und eine zweite Parklücke 13, die benachbart sind, frei. Die Parklücken 11, 13 sind auch jeweils groß genug, so dass das Fahrzeug 1 sowohl in die erste Parklücke 11 als auch in die zweite Parklücke 13 einparken kann.

Um den Fahrer beim Einparken in die erste Parklücke 11 oder in die zweite Parklücke 13 zu unterstützen, werden von einem Fahrassistenzsystem, das den Fahrer des Fahrzeugs 1 beim Einparken unterstützt, Trajektorien in die Parklücken berechnet. In der hier dargestellten Ausführungsform wurden eine erste Trajektorie 15, entlang der Fahrzeug 1 in die erste Parklücke 11 einfahren kann, und eine zweite Trajektorie 17, entlang der das Fahrzeug in die zweite Parklücke 13 einfahren kann, berechnet. Die Trajektorien 15, 17 sind dabei jeweils so berechnet, dass das Einparken des Fahrzeugs 1 in einem Zug erfolgen kann. Das Einparken des Fahrzeugs 1 erfolgt in der hier dargestellten Ausführungsform rückwärts. Neben einem Rückwärtseinparken ist es alternativ auch möglich, dass das Fahrzeug vorwärts in eine der Querparklücken 11, 13 einparkt. Auch für diesen Fall lassen sich Trajektorien berechnen, entlang denen das Fahrzeug in die Parklücken 13, 15 einfahren kann.

Neben dem Einparken in eine Querparklücke 11, 13 ist es alternativ auch möglich, dass das Fahrzeug in eine Parallelparklücke einparkt. In der hier dargestellten Ausführungsform sind beispielhaft parallel parkende Fahrzeuge 19 dargestellt. Die parallel parkenden Fahrzeuge 19 parken dabei auf der den Querparkplätze 5 gegenüberliegenden Seite des Fahrwegs 3. Das erfindungsgemäße Verfahren eignet sich neben der Unterstützung des Fahrers beim Einparken in eine Querparklücke 11, 13 auch beim Einparken in eine Parallelparklücke. Hierbei wird üblicherweise zunächst die Umgebung des Fahrzeugs während der Vorbeifahrt erfasst und auf diese Weise detektiert, ob eine geeignete Parallelparklücke vorliegt. Nach dem Vorbeifahren wird eine geeignete Einparktrajektorie in die Parallelparklücke berechnet.

Um den Fahrer des Fahrzeugs 1 beim Einparken zu unterstützen, werden diesem Lenkanweisungen übermittelt, mit deren Hilfe er das Fahrzeug 1 entlang einer der berechneten Trajektorien 15, 17 in die Parklücke 11, 13 einfahren kann. Erfindungsgemäß erhält der Fahrer die Lenkanweisung, um entlang der Trajektorie 15, 17 zu fahren, haptisch, indem ein zusätzliches Moment am Lenkrad des Fahrzeugs aufgebracht wird. Durch das zusätzlich aufgebrachte Moment wird der Fahrer dazu angeleitet, das Lenkrad in Richtung des geringeren Momentes zu bewegen und so der Trajektorie 15, 17 zu folgen. Durch die mithilfe des Lenkrads haptisch gegebenen Anweisungen kann der Fahrer seine volle Aufmerksamkeit der Umgebung widmen und ist nicht gezwungen, seinen Blick auf eine Anzeigevorrichtung zu richten. Durch die Erhöhung des Momentes bei einer Lenkbewegung, die zu einer Abweichung von der berechneten Trajektorie 15, 17 führen würde, fühlt sich das Fahrmanöver an wie Fahren in Spurrillen. Wenn, wie in Figur 1 dargestellt, zwei Parklücken frei sind und alternative Trajektorien 15, 17 berechnet worden sind, muss dem Fahrer die Möglichkeit gegeben werden, eine der beiden Trajektorien auszuwählen. Dies erfolgt zum Beispiel dadurch, dass der Fahrer das auf das Lenkrad aufgebrachte Moment übersteuert. Dies bedeutet, dass der Fahrer eine zusätzliche Kraft aufbringt und das Lenkrad in die Richtung bewegt, in der das Moment zunächst bis zu einem Maximum zunimmt. Beim Überschreiten des Maximums nimmt das Moment wieder ab und der Lenkeinschlag wird so gewählt, dass die zweite Trajektorie gefahren wird.

Alternativ ist es auch möglich, insbesondere wenn keine alternative Trajektorie zur Verfügung steht oder aber bei einer Lenkbewegung in die durchgeführte Richtung keine weitere Trajektorie berechnet worden ist, dass die Steuerung des Fahrzeugs wieder an den Fahrer übergeben wird und die Lenkunterstützung des Fahrers abgeschaltet wird.

Neben der Auswahl einer Trajektorie während der Fahrt ist es alternativ auch möglich, dass der Fahrer im Stillstand durch entsprechende Lenkbewegung die Trajektorie auswählt, entlang der er in eine der freien Parklücken 11, 13 einfahren möchte. In diesem Fall kann die Auswahl alternativ zum Übersteuern mit dem Lenkrad zum Beispiel auch durch ein geeignetes Betätigungselement, beispielsweise einen berührungsempfindlichen Bildschirm oder einen beliebigen Schalter oder Taster, erfolgen.

Alternativ zur hier dargestellten Unterstützung des Fahrers des Fahrzeugs 1 bei einem Einparkmanöver in eine Querparklücke 11, 13 ist es alternativ auch möglich, dass das erfindungsgemäße Verfahren eingesetzt wird, um dem Fahrer beim Einparken in eine Parallelparklücke zu unterstützen.

Neben der Unterstützung beim Einparken kann der Fahrer insbesondere auch beim Durchfahren enger Straßen oder Gassen unterstützt werden, wie sie beispielsweise auf Parkplätzen oder in Parkhäusern oder auch insbesondere in Altstadtbereichen mit engen Straßen auftreten.

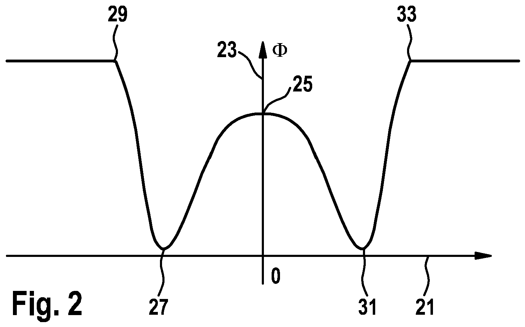

Ein Lenkmomentpotential bei zwei Auswahlmöglichkeiten ist in Figur 2 dargestellt.

Figur 2 zeigt beispielhaft das Lenkmomentpotential, wie es sich zum Beispiel für die Auswahl der ersten Trajektorie 15 und zweiten Trajektorie 17 gemäß Figur 1 einstellen kann. Hierzu ist auf der Abszisse 21 der Lenkwinkel und auf der Ordinate 23 das Moment aufgetragen. Als Schnittpunkt von Abszisse 21 und Ordinate 23 wird die Neutralstellung des Lenkrades, die bei Geradeausfahrt gegeben ist, gewählt.

Um entlang der in Figur 1 dargestellten ersten Trajektorie 15 zu fahren, muss der Fahrer des Fahrzeugs 1 das Lenkrad zunächst nach links bewegen. Hierzu nimmt das Moment von einem lokalen Maximum 25 in der Neutralstellung des Lenkrades zu einem ersten Minimum 27 ab. Das erste Minimum 27 befindet sich an der Lenkposition, bei der das Fahrzeug 1 entlang der ersten Trajektorie 15 bewegt wird. Wenn der Fahrer das Lenkrad weiterbewegt, nimmt das Moment wieder bis zu einem Maximum 29 zu.

Wenn der Fahrer entlang der zweiten Trajektorie 17 in die zweite Parklücke 13 fahren möchte, ist zunächst eine Bewegung des Lenkrades nach rechts erforderlich. In diesem Fall nimmt das Moment vom lokalen Maximum 25 zu einem zweiten Minimum 31 hin ab. Das zweite Minimum 31 ist dann erreicht, wenn die Lenkstellung der Lenkradposition entspricht, bei der sich das Fahrzeug entlang der zweiten Trajektorie 17 bewegt. Vom zweiten Minimum 31 aus nimmt das Moment bei einer Weiterbewegung des Lenkrades nach rechts bis zum Erreichen eines Maximums 33 zu.

Wenn der Fahrer das Lenkrad über den Punkt, zu dem das jeweilige Maximum 29, 33 erreicht ist, weiterbewegt, wird die Steuerung des Fahrzeugs wieder an den Fahrer übergeben und die Unterstützung wird beendet. Durch das zunehmende Moment muss der Fahrer bei einer Abweichung von der Lenkposition, bei der sich das Fahrzeug entlang der Trajektorie 15, 17 bewegt, eine erhöhte Kraft aufwenden. Dies führt dazu, dass der Fahrer dazu neigt, der jeweiligen Trajektorie 15, 17 zu folgen. Das Fahren entlang der Trajektorie 15, 17 fühlt sich für den Fahrer an als ob er in einer Spurrille fährt.

Um dem Fahrer keine zu hohe Kraftanstrengung abzufordern, wenn er zwischen der ersten Trajektorie 15 und der zweiten Trajektorie 17 auswählt beziehungsweise sich umentscheiden möchte, ist das lokale Maximum 25 des Momentes zwischen den Minima 27, 31 kleiner als die Maxima 29, 33, deren Übersteuern zu keiner weiteren alternativen Trajektorie führt. Auf diese Weise wird dem Fahrer des Fahrzeugs 1 zwar zwischen den Minima 27, 31 ein Anstieg des Momentes bis zum lokalen Maximum 25 vorgegeben, dieses lässt sich jedoch auf einfachere Weise übersteuern als die Maxima 29, 33, deren Übersteuern nicht zu einer weiteren alternativen Trajektorie führt.

Vorteilhaft ist es weiterhin, wenn nach der Auswahl einer der Trajektorien 15, 17 ab einem Zeitpunkt, zu dem ein Wechsel nicht mehr sinnvoll ist, die die jeweilige vorgegebene Lenkradstellung begrenzenden Maxima gleich gewählt werden, so dass der Fahrer nur noch entlang der zuvor gewählten Trajektorie fahren kann. Ein Übersteuern der die Trajektorie begrenzenden Maxima führt in diesem Falle in jedem Fall zu einem Abbruch der Unterstützung des Fahrers beim Einparken.

Da der Fahrer durch das Aufbringen eines Momentes am Lenkrad nur eine Unterstützung zur Lenkführung, das heißt der Querführung des Fahrzeugs, bekommt, ist es weiterhin vorteilhaft, wenn während des Fahrmanövers, beispielsweise dem Einparken, der Abstand zu Objekten in der Umgebung auf bekannte Weise, beispielsweise optisch oder akustisch, angezeigt wird. Auf diese Weise erhält der Fahrer eine Unterstützung zur Längsführung, so dass dieser das Fahrzeug zum Beispiel rechtzeitig vor Erreichen eines Hindernisses oder bei abgeschlossenem Einparkvorgang abbremsen kann. Wenn die Anzeige zu Objekten in der Umgebung optisch erfolgt, so kann dies zum Beispiel durch Verwendung von LEDs erfolgen.

Alternativ ist es auch möglich, zum Beispiel das Fahrzeug schematisch zweidimensional auf einem Bildschirm darzustellen und entsprechend ebenfalls Objekte in der Umgebung des Fahrzeugs auf dem Bildschirm zu zeigen. Eine akustische Anzeige erfolgt üblicherweise mittels Tönen, wobei die Frequenz der gesendeten Töne mit abnehmenden Abstand zu einem Objekt zunimmt. Gleichzeitig kann auch die Lautstärke und/oder die Tonhöhe zunehmen. Sobald ein kritischer Abstand zu einem Objekt unterschritten wird, wird ein Dauerton gesendet. Zusätzlich zur optischen und/oder akustischen Anzeige des Abstandes zu einem Objekt kann auch eine haptische Anzeige zum Beispiel durch Vibration erfolgen. Hierzu ist es zum Beispiel möglich, Vibrationen über das Lenkrad oder auch den Fahrersitz zu übertragen.

## Patentansprüche

1. Verfahren zur Unterstützung eines Fahrers eines Fahrzeugs (1) bei einem Fahrmanöver, wobei zunächst anhand von Daten der Umgebung des Fahrzeugs (1) eine zu fahrende Trajektorie (15, 17) berechnet wird und der Fahrer Hinweise zu notwendigen Lenkeinstellungen zum Fahren der Trajektorie (15, 17) haptisch erhält, indem ein zusätzliches Moment am Lenkrad des Fahrzeugs aufgebracht wird, wodurch der Fahrer für eine Bewegung des Lenkrads in eine Richtung, die von der Lenkeinstellung zum Fahren der Trajektorie wegführt, eine deutlich größere Kraft aufwenden muss als für eine Bewegung des Lenkrads in Richtung der Lenkeinstellung, die für das Fahren der Trajektorie notwendig ist,
**dadurch gekennzeichnet, dass**
bei mehreren möglichen alternativ zu fahrenden Trajektorien (15, 17) eine Auswahl der Trajektorie (15, 17) durch Überwinden des auf das Lenkrad aufgebrachten Momentes erfolgt, wobei
das Moment, das zwischen zwei Lenkeinstellungen zum Befahren alternativer Trajektorien (15, 17) auf das Lenkrad aufgebracht wird, kleiner ist als das Moment, das auf das Lenkrad aufgebracht wird, wenn keine weitere alternative Trajektorie bei einem Überwinden des Momentes ermittelt wurde.

2. Verfahren gemäß Anspruch 1, **dadurch gekennzeichnet, dass** das auf das Lenkrad aufgebrachte Moment zunimmt, wenn die gewählte Lenkeinstellung von der zum Fahren der Trajektorie (15, 17) notwendigen Lenkeinstellung abweicht.

3. Verfahren gemäß einem der vorhergehenden Ansprüche, **dadurch gekennzeichnet, dass** bei einer Betätigung des Lenkrades, bei der das auf das Lenkrad aufgebrachte Moment überwunden wird, die Ausgabe von Hinweisen zu Lenkeinstellungen beendet wird.

4. Verfahren einem der vorhergehenden Ansprüche, **dadurch gekennzeichnet, dass** das Fahrmanöver das Durchfahren enger Straßen oder Gassen ist.

5. Verfahren gemäß Anspruch 4, **dadurch gekennzeichnet, dass** die engen Straßen oder Gassen enge Straßen oder Gassen auf Parkplätzen, in Parkhäusern oder in Altstadtbereichen sind.

6. Verfahren gemäß einem der Ansprüche 1 bis 3, **dadurch gekennzeichnet, dass** das Fahrmanöver ein Einparkvorgang in eine Parklücke (11, 13) ist.

7. Verfahren gemäß Anspruch 6, **dadurch gekennzeichnet, dass** mehrere alternative Trajektorien (15, 17) berechnet werden, wenn von einer momentanen Position des Fahrzeugs aus mehrere Parklücken (11, 13) befahren werden können.

8. Verfahren gemäß einem der vorhergehenden Ansprüche, **dadurch gekennzeichnet, dass** der Fahrer zusätzlich optische und/oder akustische Informationen zur Umgebung des Fahrzeugs erhält.

## Claims

1. Method for supporting a driver of a vehicle (1) during a driving manoeuvre, firstly a trajectory (15, 17) to be followed being calculated by using data from the surroundings of the vehicle (1), and the driver being given advice by touch relating to necessary steering settings to follow the trajectory (15, 17), in that an additional torque is applied to the steering wheel of the vehicle, which means that the driver must apply a considerably greater force for a movement of the steering wheel in a direction which leads away from the steering settings for following the trajectory than for a movement of the steering wheel in the direction of the steering setting which is necessary to follow the trajectory,
**characterized in that**
in the event of multiple possible alternative trajectories (15, 17) to be followed, selection of the trajectory (15, 17) is made by overcoming the torque applied to the steering wheel, wherein
the torque which is applied to the steering wheel between two steering settings for driving on alternative trajectories (15, 17) is smaller than the torque which is applied to the steering wheel if no further alternative trajectory has been determined when overcoming the torque.

2. Method according to Claim 1, **characterized in that** the torque applied to the steering wheel increases if the selected steering setting differs from the steering setting necessary to follow the trajectory (15, 17).

3. Method according to one of the preceding claims, **characterized in that** in the event of an actuation of the steering wheel in which the torque applied to the steering wheel is overcome, the output of advice relating to steering settings is terminated.

4. Method according to one of the preceding claims, **characterized in that** the driving manoeuvre is driving through narrow streets or lanes.

5. Method according to Claim 4, **characterized in that** the narrow streets or lanes are narrow streets or lanes on car parks, in multi-storey car parks or in old-town regions.

6. Method according to one of Claims 1 to 3, **characterized in that** the driving manoeuvre is a parking operation in a parking space (11, 13).

7. Method according to Claim 6, **characterized in that** a plurality of alternative trajectories (15, 17) is calculated when a plurality of parking spaces (11, 13) can be entered from an instantaneous position of the vehicle.

8. Method according to one of the preceding claims, **characterized in that** the driver is additionally given visual and/or acoustic information relating to the surroundings of the vehicle.

## Revendications

1. Procédé pour assister un conducteur d'un véhicule (1) lors d'une manoeuvre de conduite, une trajectoire (15, 17) à parcourir étant initialement calculée à l'aide de données de l'environnement du véhicule (1) et le conducteur obtenant de manière haptique des consignes à propos des réglages de direction nécessaires pour parcourir la trajectoire (15, 17), en ce qu'un moment supplémentaire est appliqué au volant de direction du véhicule, ce par quoi le conducteur, pour un mouvement du volant de direction dans une direction qui s'éloigne du réglage de direction destiné à parcourir la trajectoire, doit employer une force nettement plus élevée que pour un mouvement du volant de direction dans la direction du réglage de direction qui est nécessaire pour parcourir la trajectoire,
**caractérisé en ce que**
en présence de plusieurs trajectoires (15, 17) alternatives possibles, une sélection des trajectoires (15, 17) est effectuée en surmontant le moment appliqué au volant de direction,
le moment qui est appliqué au volant de direction entre deux réglages de direction destinés à parcourir des trajectoires (15, 17) alternatives étant inférieur au moment qui est appliqué au volant de direction quand aucune trajectoire alternative supplémentaire n'a été déterminée au moment de surmonter le moment.

2. Procédé selon la revendication 1, **caractérisé en ce que** le moment qui est appliqué au volant de direction augmente lorsque le réglage de direction sélectionné s'écarte du réglage de direction nécessaire pour parcourir la trajectoire (15, 17).

3. Procédé selon l'une des revendications précédentes, **caractérisé en ce que** lors d'un actionnement du volant de direction lors duquel le moment appliqué au volant de direction est surmonté, la délivrance de consignes relatives aux réglages de direction prend fin.

4. Procédé selon l'une des revendications précédentes, **caractérisé en ce que** la manoeuvre de conduite est le passage dans des rues étroites ou des ruelles.

5. Procédé selon la revendication 4, **caractérisé en ce que** les rues étroites ou les ruelles sont des rues étroites ou des ruelles sur des aires de stationnement, dans des parkings couverts ou dans des zones de vieilles villes.

6. Procédé selon l'une des revendications 1 à 3, **caractérisé en ce que** la manoeuvre de conduite est une opération d'entrée en stationnement dans un emplacement de stationnement (11, 13).

7. Procédé selon la revendication 6, **caractérisé en ce que** plusieurs trajectoires (15, 17) alternatives sont calculées si plusieurs emplacements de stationnement (11, 13) peuvent être atteints depuis une position momentanée du véhicule.

8. Procédé selon l'une des revendications précédentes, **caractérisé en ce que** le conducteur reçoit en plus des informations visuelles et/ou sonores à propos de l'environnement du véhicule.
